# EUROPÄISCHE PATENTSCHRIFT

(11) **EP 1 490 203 B1**
(45) Veröffentlichungstag und Bekanntmachung des Hinweises auf die Patenterteilung: **12.12.2007**
(21) Anmeldenummer: 03744343.9
(22) Anmeldetag: 07.03.2003
(51) Int. Cl.: B29C 45/14, B32B 38/10

(54) **VERFAHREN ZUR HERSTELLUNG VON METALLISIERTEN KUNSTSTOFFFORMTEILEN UND DEREN VERWENDUNG**
METHOD FOR THE PRODUCTION OF METALLISED PLASTIC MOULDED PIECES AND USE THEREOF
PROCEDE DE PRODUCTION DE PIECES MOULEES EN PLASTIQUE METALLISEES ET LEUR UTILISATION

(30) Priorität: 20.03.2002 DE 10212304
(43) Veröffentlichungstag der Anmeldung: 29.12.2004
(73) Patentinhaber: Bayer MaterialScience AG, 51368 Leverkusen (DE)
(72) Erfinder: TZIOVARAS, Georgios, 42697 Solingen (DE); POPHUSEN, Dirk, 51467 Bergisch Gladbach (DE); GEHRKE, Hans-Georg, 51519 Odenthal (DE)
(86) Internationale Anmeldenummer: PCT/EP2003/002343
(87) Internationale Veröffentlichungsnummer: WO 2003/078132

(56) Entgegenhaltungen:
- EP-A- 0 734 885
- DE-U- 29 604 910
- PATENT ABSTRACTS OF JAPAN vol. 2000, no. 02, 29. Februar 2000 (2000-02-29) -& JP 11 329139 A (NISSHA PRINTING CO LTD), 30. November 1999 (1999-11-30)

## Beschreibung

Die Erfindung betrifft ein Verfahren zur Herstellung von metallisierten Kunststoffformteilen und die Verwendung der so hergestellten Formteile.

Um Kunststoffformteile, die zusätzlich zum üblichen Dekor. (z.B. Schriftzüge, Logos) einen metallischen Glanz aufweisen, herzustellen, werden vorgefertigte metallisierte Folien bedruckt, anschließend verformt und mit einem Kunststoff hinterspritzt. Es werden auch lichtdurchlässige Kunststofffolien zuerst bedruckt und anschließend metallisiert. Danach wird verformt und gegebenenfalls noch eine Schutzschicht auf die Metallschicht aufgebracht. Diese Verfahren werden beispielsweise zur Herstellung von Autoteilen aus Kunststoff, wie z.B. Abdeckungen für Radnaben usw. durchgeführt. Die Verfahren haben den Nachteil, dass die so hergestellten Teile bedingt durch die Metallschicht nicht lichtdurchlässig sind und somit auch keine Durchlichttechnik an diesen Teilen eingesetzt werden kann.

JP-A-11329139 offenbart ein Verfahren zur Herstellung eines Kunststoffformteiles, wobei:
- auf eine lichtdurchlässige Kunststofffolie mit einer Dicke von 75 µm bis 150 µm eine Metallschicht aufgebracht wird;
- die Metallschicht auf der metallisierten Folie teilweise entfernt wird;
- anschließend eine Klebeschicht auf die metallisierte Seite der Folie aufgebracht wird;
- das so hergestellte Produkt verformt wird;
- und abschließend mit einem lichtdurchlässigen thermoplastischen Kunststoff hinterspritzt wird.

Aufgabe der vorliegenden Erfindung war es daher, ein Verfahren zur Verfügung zu stellen, mit dem es möglich ist, Kunststoffformteile mit einem metallischen Glanz und anderen üblichen Dekoreffekten auf technisch einfache Weise herzustellen. Gleichzeitig sollen die so hergestellten Teile die Anwendung der Durchlichttechnik ermöglichen.

Diese Aufgabe konnte durch das erfindungsgemäße Verfahren gelöst werden.

Gegenstand der Erfindung ist ein Verfahren zur Herstellung eines Kunststoffformteiles, das die folgenden Schritte umfaßt:
a) auf eine lichtdurchlässige Kunststofffolie mit einer Dicke von 50 µm bis 750 µm eine Metallschicht in einer Dicke von 20 nm bis 150 nm aufgebracht wird,
c) anschließend eine Klebeschicht in einer Dicke von 5 µm bis 50 µm auf die metallisierte Seite der Folie aufgebracht wird,
d) danach gegebenenfalls eine bedruckte oder unbedruckte, lichtdurchlässige Kunststofffolie einer Dicke von 50 µm bis 750 µm auf die Klebeschicht aus c) laminiert wird,
e) gegebenenfalls anschließend auf die Folie aus d) bzw. auf die Schicht aus c) eine Dekorschicht in einer Dicke von 3 µm bis 40 µm aufgebracht wird,
f) das Produkt aus c), d) oder e) gegebenenfalls verformt wird,
g) und mit einem lichtdurchlässigen thermoplastischen Kunststoff hinterspritzt wird,
b) und abschließend die Metallschicht auf der metallisierten Folie aus a) teilweise entfernt wird.

Im erfindungsgemäßen Verfahren wird auf eine lichtdurchlässige Kunststofffolie eine Metallschicht aufgebracht. Diese Metallschicht wird bevorzugt durch das sogenannte PVD-Verfahren (Physical Vapor Deposition) oder durch das CVD-Verfahren (Chemical Vapor Deposition) aufgetragen (sogenannte Direkt-Metallisierung). Die Metallschicht kann auch vorzugsweise durch Transfer- oder Übertragungs-Metallisierung aufgetragen werden (siehe beispielsweise Joachim Nentwig, KunststoffFolien 2000, Carl Hanser Verlag, München, Wien). Als Metalle werden üblicherweise Aluminium, Chrom, Silber, Nickel und Gold eingesetzt.

Die Klebeschicht wird vorzugsweise durch Siebdruck auf die metallisierte Seite der Folie aufgetragen. Sie kann auch durch Rakeln oder Sprühen aufgebracht werden. Sie dient gleichzeitig als Schutz für die Metallschicht. Bevorzugt werden thermoaktivierbare Polyurethankleber eingesetzt, wie sie beispielsweise in "Adhesion-Kleben & Dichten" von Dr. G. Festel, Dr. A. Proß, Dr. H. Stepanski, Dr. H. Blankeheim, Dr. R. Witkowski, Friedrich Vieweg & Sohn Verlagsgesellschaft mbH, Wiesbaden, beschrieben werden.

Gegebenenfalls wird danach eine bedruckte oder unbedruckte, lichtdurchlässige Kunststofffolie auf die Klebeschicht laminiert. Die Folie kann auch gefärbt sein. Diese Folie kann den Glanzverlust der Metallschicht verhindern oder verringern. Der Glanzverlust kann beim Hinterspritzen bei hohen Temperaturen auftreten. Die Laminierung erfolgt vorzugsweise bei Temperaturen, die unter dem Erweichungspunkt der Folie liegen.

Anschließend wird gegebenenfalls noch eine Dekorschicht aufgebracht. Vorzugsweise wird die Dekorschicht durch Siebdruck aufgetragen. Der Auftrag kann jedoch auch mittels Offsetdruck, Tiefdruck, Transferdruck oder Digitaldruck erfolgen. Die hierfür eingesetzten Farben sollten lichtdurchlässig sein.

Danach wird verformt. Für die Verformung wird vorzugsweise das sogenannte "High-Pressure-Forming"-Verfahren durchgeführt, wie es beispielsweise in DE-A 3 844 584 beschrieben ist. Vorzugsweise erfolgt die Verformung der Folie unterhalb der Erweichungstemperatur der Folie, so dass der Glanz der Metallschicht nicht beeinträchtigt wird.

Weitere Verfahren sind das mechanische Verformen und das Hydroforming. Falls es die Geometrie des Teiles erlaubt (z.B. nur leichte Krümmung eines Flachteiles), kann die Verformung auch durch den Druck des Thermoplasten während des Hinterspritzens erfolgen, so dass der zusätzliche Verformungsschritt weggelassen werden kann. Nach dem Verformungsschritt werden die überstehenden Reste entfernt, bevorzugt durch Stanzen. Die Entfernung der Reste kann auch durch Laserschneiden, Wasserstrahlschneiden oder Fräsen erfolgen.

Danach wird mit einem lichtdurchlässigem thermoplastischen Kunststoff hinterspritzt.

An den gewünschten Stellen/Bereichen wird abschließend die Metallschicht wieder von der Kunststofffolie entfernt. Dies geschieht mittels eines Laserstrahls (siehe beispielsweise Gottfried W. Ehrenstein, Stefan Stampfer, 3D-spritzgegossene Formteile mit strukturiertem Leiterbild, Spritzgießen 2000 - Internationale Jahrestagung, VDI-Verlag, 2000). Erfindungsgemäß erfolgt der Schritt b) [teilweise Entfernung der Metallschicht] nach dem Schritt g). Die Dicke der Metallschicht liegt normalerweise im Nanometerbereich. Die Metallschicht wird durch den Laserstrahl am Auftreffpunkt des Strahls entfernt, wodurch ein Bereich geschaffen wird, durch den soweit gewünscht mittels der Durchlichttechnik Licht durchtreten kann.

Die nach dem erfindungsgemäßen Verfahren hergestellten Kunststoffformteile werden als Schalter und Armaturen, insbesondere im Kfz-Bereich und im Elektronikbereich, als Zierleisten, insbesondere im Kfz-Außenbereich, als Reflektoren, insbesondere von Lampen und Scheinwerfern, als Gehäuse, insbesondere von Telefonen und Mobiltelefonen, als Blenden, insbesondere von Haushaltsgeräten, als Werbetafeln und als Verpackungsartikel sowie für die Herstellung von Identifizierungskarten eingesetzt.

### Beispiel (keine Ausführungsform der Erfindung)

a) Metallisierung einer Polycarbonatfolie (Makrofol® DE1-1C, 175 µm von Bayer AG) mit Aluminium.
Die Folie wurde einer Plasma-Vorbehandlung unterworfen, um die Haftung der Metallschicht auf der Folie zu erhöhen. Das Aluminium wurde in einer Dicke von 80 nm durch das PVD-Verfahren (Direkt-Metallisierung) aufgebracht. Die Metallisierung erfolgte auf einer Metallisierungsanlage der Firma Heraeus-Leibold.
b) Abtragen der Al-Schicht in ausgewählten Bereichen durch Laser
Mit einer Laser-Anlage von Rofin Sinar "Marker Power Line 60" erfolgte ein präziser Abtrag der Al-Schicht.

**Versuchsanordnung:**

| | |
|---|---|
| Laser-Medium: | Nd YAG |
| Leistung: | 60 Watt |
| Strom: | 8,5 A |
| Wellenlänge: | 1064 nm |
| Pulsfrequenz: | 4,1 kHz |
| Vorschubgeschwindigkeit: | 200 mm/sek. |

c) Auftrag einer Klebeschicht
Der Kleber "Aquapress® ME" der Fa. Pröll wurde durch Siebdruck aufgebracht. Es wurde dreimal gedruckt. Das verwendete Polyestergewebesieb hatte 100 Fäden pro cm. Nach dem Trocknen der bedruckten Folien war die Schichtdicke des Klebers 20 µm.
d) Zusätzliche Folie
Eine 100 µm dicke Polycarbonatfolie (Makrofol® DE1-4, 175 µm von Bayer AG) wurde auf das Produkt aus c) auflaminiert. Das Laminieren erfolgte bei einer Folientemperatur von 90°C und einem Anpressdruck von 4 bar.
e) Dekorschicht
Durch Siebdruck wurde das lichtdurchlässige Farbsystem "Noriphan® HTR" der Fa. Pröll aufgetragen. Es wurde einmal gedruckt. Das verwendete Gewebesieb aus Polyester hatte 100 Fäden pro cm. Nach dem Trocknen der bedruckten Folie war die Schichtdicke der Farbe 6 µm.
f) Das Produkt aus e) wurde durch High-Pressure-Forming verformt und die überstehenden Reste abgeschnitten. Die Produkttemperatur betrug ca. 80°C und die Werkzeugtemperatur ca. 75°C.
g) Das verformte Produkt aus f) wurde mit Makrolon® 2400 (Polycarbonat der Bayer AG) hinterspritzt. Die Massetemperatur betrug 290°C und die Werkzeugtemperatur 60°C.

## Patentansprüche

1. Verfahren zur Herstellung eines Kunststoffformteiles, das die Folgenden Schritte umfaßt:
a) auf eine lichtdurchlässige Kunststofffolie mit einer Dicke von 50 µm bis 750 µm eine Metallschicht in einer Dicke von 20 nm bis 150 nm aufgebracht wird,
c) anschließend eine Klebeschicht in einer Dicke von 5 µm bis 50 µm auf die metallisierte Seite der Folie aufgebracht wird,
d) danach gegebenenfalls eine bedruckte oder unbedruckte, lichtdurchlässige Kunststofffolie einer Dicke von 50 µm bis 750 µm auf die Klebeschicht aus c) laminiert wird,
e) gegebenenfalls anschließend auf die Folie aus d) bzw. auf die Schicht aus c) eine Dekorschicht in einer Dicke von 3 µm bis 40 µm aufgetragen wird,
f) das so hergestellte Produkt gegebenenfalls verformt wird,
g) und mit einem lichtdurchlässigen thermoplastischen Kunststoff hinterspritzt wird,
b) und abschließend die Metallschicht mittels Laser auf der metallisierten Folie aus a) teilweise entfernt wird.

2. Verwendung der gemäß Anspruch 1 hergestellten Formteile als Schalter, Armaturen, Zierleisten, Reflektoren, Gehäuse, Blenden, Werbetafeln und Verpackungsartikel sowie für Identifizierungskarten.

## Claims

1. A method of making a plastic moulding comprising the following steps:
a) a metallic layer from 20 nm to 150 nm thick is applied to a translucent plastic film from 50 µm to 750 µm thick,
c) an adhesive layer from 5 µm to 50 µm thick is thereupon applied to the metallised side of the film,
d) a printed or non-printed, translucent plastic film from 50 µm to 750 µm thick is next optionally laminated onto the adhesive layer of c),
e) a decorative layer from 3 µm to 40 µm thick is optionally applied then to the film of d) or the layer of c),
f) the product thus made is optionally shaped,
g) and it is back-sprayed with a translucent thermoplastic.
b) and finally the metallic layer on the metallised film of a) is partly removed by means of a laser.

2. Use of mouldings made according to claim 1 as switches, fittings, trim strips, reflectors, casings, shields, advertising panels and packaging items, and also for identification cards.

## Revendications

1. Procédé de production d'une pièce moulée en plastique métallisée qui comporte les étapes suivantes :
a) une couche métallique d'une épaisseur de 20 nm à 150 nm est appliquée sur un film plastique translucide d'une épaisseur de 50 µm à 750 µm,
c) ensuite une couche adhésive d'une épaisseur de 5 µm à 50 µm est appliquée sur la face métallisée du film,
d) ensuite un film plastique d'une épaisseur de 50 µm à 750 µm est laminé le cas échéant, sur la couche adhésive de c),
e) sur le film de d) ou sur la couche de c), est ensuite appliquée le cas échéant une couche décorative d'une épaisseur de 3 µm à 40 µm,
f) le cas échéant, le produit de c), d) ou e) est déformé
g) et surmoulé par injection d'un thermoplastique translucide,
b) et pour finir, la couche métallique est partiellement retirée du film métallisé de a).

2. Utilisation des pièces moulées, fabriquées selon la revendication 1, comme interrupteurs, armatures, enjoliveurs, réflecteurs, boîtiers, caches, panneaux publicitaires et articles d'emballage ainsi que pour les cartes d'identification.
